# EUROPÄISCHE PATENTSCHRIFT

(11) **EP 1 625 061 B1**
(45) Veröffentlichungstag und Bekanntmachung des Hinweises auf die Patenterteilung: **15.11.2006**
(21) Anmeldenummer: 04739139.6
(22) Anmeldetag: 06.05.2004
(51) Int. Cl.: B60T 13/66

(54) **BREMSANLAGE FÜR FAHRZEUGE, INSBESONDERE NUTZFAHRZEUGE MIT MINDESTENS ZWEI SEPARATEN ELEKTRONISCHEN BREMSSTEUERKREISEN**
BRAKING SYSTEMS FOR VEHICLES, IN PARTICULAR UTILITY VEHICLES, COMPRISING AT LEAST TWO SEPARATE ELECTRONIC BRAKING CONTROL CIRCUITS
SYSTEME DE FREINAGE POUR DES VEHICULES, NOTAMMENT DES VEHICULES UTILITAIRES, COMPRENANT AU MOINS DEUX CIRCUITS DE COMMANDE DE FREINAGE ELECTRONIQUES DISTINCTS.

(30) Priorität: 08.05.2003 DE 10320608
(43) Veröffentlichungstag der Anmeldung: 15.02.2006
(73) Patentinhaber: KNORR-BREMSE SYSTEME FÜR NUTZFAHRZEUGE GMBH, 80809 München (DE)
(72) Erfinder: GERUM, Eduard, 83026 Rosenheim (DE); BROCH, Walter, 71679 Asperg (DE); CSÁK, Bence, H-1124 Budapest (HU); GIANONE, László, H-1118 Budapest (HU)
(74) Vertreter: Schönmann, Kurt
(86) Internationale Anmeldenummer: PCT/EP2004/004810
(87) Internationale Veröffentlichungsnummer: WO 2004/098967

(56) Entgegenhaltungen:
- WO-A-01/62569
- DE-A- 3 204 185
- DE-A- 3 502 049
- DE-A- 19 509 150
- DE-A- 19 640 148
- DE-A- 19 904 721
- DE-A- 19 915 253

## Beschreibung

Die vorliegende Erfindung betrifft eine Bremsanlage für Fahrzeuge gemäß dem Oberbegriff des Patentanspruches 1.

Aus der DE 199 15 253 A1 ist eine Bremsanlage für Fahrzeuge mit zwei Bremskreisen bekannt, die in einer zentralen Einheit zwei Mikrocomputer enthält, die jeweils aus getrennten Energiequellen mit Strom versorgt werden. Die beiden Mikrocomputer steuern über zwei getrennte, redundante Bussysteme mehrere Bremsbetätigungseinrichtungen für einzelne Radbremsen an. Diese Ansteuerung erfolgt stets parallel über beide Bussysteme. Zur Ansteuerung der beiden Mikrocomputer sind mit einem Bremspedal gekoppelte Meßeinrichtungen vorgesehen.

Die DE 35 02 049 A beschreibt eine Bremsdrucksteuereinrichtung für ein Kraftfahrzeug mit einem Fußbremsventil, das Signale an eine Steuerelektronik sendet, die ihrerseits Druckregelventile für Radbremsen ansteuert.

Die WO 01/62569 A zeigt eine elektronische Bremssteuerung mit drei Energiequellen für die Stromversorgung. Die Stromquellen sind durch Dioden voneinander entkoppelt.

Die DE 196 40 148 A zeigt ein elektronisches Bremssystem mit mehreren Fahrzeugmodulen, die über einen Datenbus kommunizieren. Einzelne Module sind durch Optokoppler galvanisch voneinander getrennt.

Die DE 195 09 150 A zeigt eine Fahrzeugbremsanlage mit mindestens zwei Bremskreisen, die jeweils über eine voneinander unabhängige Mikroprozessor gesteuerte Regeleinheit verfügt. Ein Kontrollrechner überwacht die zwei anderen Steuer/Regeleinheiten.

Die DE 32 04 185 A zeigt wiederum eine Druckmittelbremsanlage mit einem Fußbremsventil, das Bremssteuerventile elektrisch ansteuert.

Bremsanlagen, bei denen die Bremskraft durch Druckluft aufgebracht wird, die Bremssteuerung hingegen elektronisch erfolgt. Ein wesentliches "Gütekriterium" elektrischer bzw. elektronischer Bremssteuerungen ist ihre Stör- bzw. Ausfallsicherheit.

Aufgabe der vorliegenden Erfindung ist es, eine elektrisch ansteuerbare Bremsanlage mit erhöhter Ausfall- bzw. Störsicherheit zu schaffen, die insbesondere auch höhere Funktionen, wie ABS, ASR, EBS usw., ausführen kann.

Diese Aufgabe wird durch die Merkmale des Patentanspruches 1 gelöst. Vorteilhafte Ausgestaltungen und Weiterbildungen der Erfindung sind den Unteransprüchen zu entnehmen.

Das Grundprinzip der Erfindung besteht in einer Bremsanlage mit mindestens zwei oder mehreren elektrischen bzw. elektronischen Bremssteuersystemen, wobei einzelne Bremsaktuatoren oder Gruppen von Bremsaktuaktoren verschiedenen Bremssteuersystemen zugeordnet sind, und zwar derart, daß es Bremsaktuatoren gibt, die von mehreren Bremssteuersystemen ansteuerbar sind.

Bei Ausfall bzw. Störung eines Bremssteuersystems wird die Steuerung an "kritischen" Rädern sofort von einem anderen Bremssteuersystem übernommen.

Vorzugsweise sind die einzelnen Bremssteuersysteme so voneinander getrennt, daß eine Störung in einem der Bremssteuersysteme sich nicht auf das bzw. die anderen Bremssteuersysteme auswirkt. Vorzugsweise sind die einzelnen Bremssteuersysteme galvanisch voneinander getrennt.

Vorzugsweise kommunizieren die einzelnen Bremssteuersysteme trotz ihrer Trennung miteinander, um eine schnelle Übernahme der Bremssteuerfunktion durch ein anderes Bremssteuersystem zu ermöglichen, Bremsaktivitäten-von Bremsaktuatoren, die von verschiedenen Bremssteuersystemen angesteuert werden, zu koordinieren und gelernte Parameter auszutauschen.

Bei den Bremsaktuatoren, die durch die elektronischen Bremssteuersysteme angesteuert werden, handelt es sich vorzugsweise um "pneumatische Bremsaktuatoren", d.h. bei denen die Bremskraft pneumatisch aufgebracht wird. Bei derzeit verfügbaren elektrisch betätigten Bremsaktuatoren ist nämlich noch kein zufriedenstellender bzw. ausreichender Bremskraftaufbau möglich.

Vorzugsweise ist das Bremssystem so aufgebaut, daß eine "einfache" Umstellung von den heutzutage verwendeten elektropneumatischen Bremskomponenten auf rein elektrisch gesteuerte Komponenten möglich ist.

Nach einer Weiterbildung der Erfindung weisen die Steuerkreise jeweils eine eigene Steuerelektronik und eine eigene Stromversorgung auf. Die elektrischen Steuerkreise steuern elektropneumatische Druckregelmodule an, zu deren Versorgung mit Bremsdruck mindestens zwei pneumatische Versorgungskreise vorgesehen sind.

Die Bremskreise können in verschiedener Weise auf einzelne Fahrzeugbremsen aufgeteilt werden.

Eine Möglichkeit besteht darin, einer Fahrzeugachse bzw. einer Achsgruppe einen Bremskreis zuzuordnen. Vorzugsweise weist jeder Bremskreis einen eigenen Steuerkreis und einen eigenen Versorgungskreis auf, d.h. ein Versorgungskreis und ein Steuerkreis ist dann ausschließlich einem Bremskreis zugeordnet.

Eine weitere Möglichkeit besteht darin, einen ersten Bremskreis vorzusehen, der die Funktion eines Betriebsbremskreises hat, und einen zweiten Bremskreis, der die Funktion des Betriebsbremskreises übernimmt, wobei die Bremsungen zwischen den Bremskreisen gleichmäßig wechselnd aufgeteilt werden. Der nicht aktive Bremskreis wird in diesem Zustand jeweils auf Fehler geprüft. Bei Ausfall eines Bremskreises werden die Funktionen sofort von dem anderen übernommen und ausgeführt, wobei weitere Wechsel erfolgen, eine fehlerhafte Funktion jedoch von einer redundanten fehlerfreien ausgeführt wird. Für jeden Bremskreis ist jeweils eine eigene Steuerelektronik vorgesehen, die über eine Kommunikationsleitung mit den anderen galvanisch getrennt miteinander kommunizieren können. Vorzugsweise weist der Betriebsbremskreis zwei separate Unterversorgungskreise auf, die jeweils an einen eigenen zugeordneten Druckmittelspeicher angeschlossen sind. Der erste Unterversorgungskreis ist beispielsweise zur Druckbeaufschlagung von Druckregelmodulen einer Vorderachse und der andere Unterversorgungskreis zur Druckbeaufschlagung von Druckregelmodulen einer Hinterachse vorgesehen. Der zweite Bremskreis weist ebenfalls einen eigenen Druckmittelspeicher auf.

Im folgenden wird die Erfindung im Zusammenhang mit der Zeichnung näher erläutert. Es zeigen:
- Fig. 1: ein erstes Ausführungsbeispiel gemäß der Erfindung;
- Fig. 2: ein zweites Ausführungsbeispiel gemäß der Erfindung;
- Fig. 3: ein Prinzipschaltbild der Energieversorgung der beiden Bremssteuerkreise;
- Fig. 4: ein schematisches Ausführungsbeispiel eines Feststellbremsventils; und
- Fig. 5: eine schematische Darstellung vernetzter elektronischer Steuersysteme.

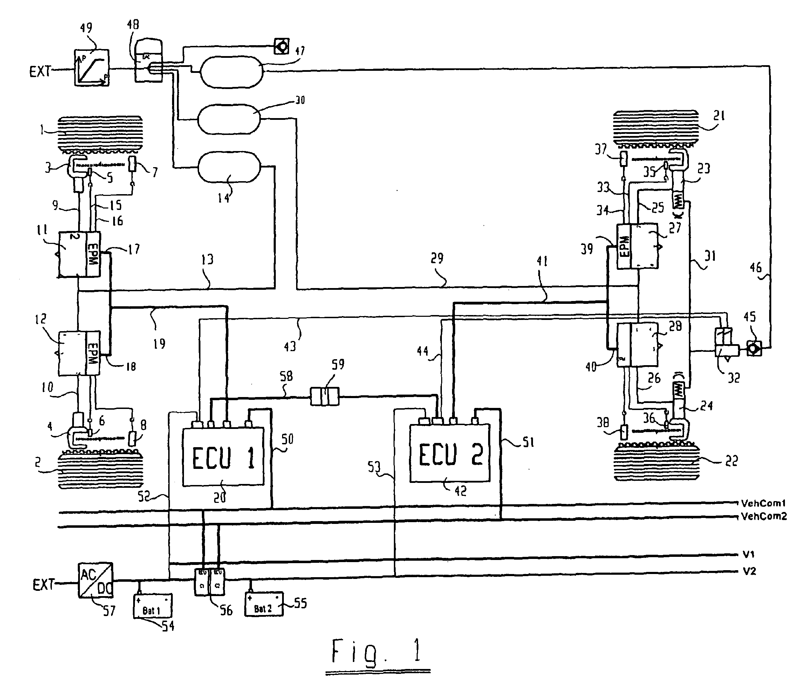

Fig. 1 zeigt in schematischer Darstellung eine elektropneumatische Fahrzeugbremsanlage. Vorderrädern 1, 2 sind jeweils ein Bremszylinder 3, 4, ein Bremsbelagverschleißsensor 5, 6 sowie ein Raddrehzahlsensor 7, 8 zugeordnet. Die Bremszylinder 3, 4 werden über pneumatische Leitungen 9, 10 von zugeordneten elektropneumatischen Druckregelmodulen 11, 12 (EPM) mit Bremsdruck beaufschlagt. Die beiden Druckregelmodule 11, 12 sind hier über eine gemeinsame Versorgungsleitung 13 mit einem ersten der Vorderachse zugeordneten Druckluftspeicher 14 verbunden. Die Bremsbelagverschleißsensoren 5, 6 und die Raddrehzahlsensoren 7, 8 sind jeweils über elektrische Leitungen 15, 16 mit Signaleingängen der Druckregelmodule 11, 12 verbunden. Die Druckregelmodule 11, 12 weisen ferner jeweils einen elektrischen Steuereingang 17, 18 auf, die über hier nur schematisch dargestellte elektrische Leitungen 19 mit einer ersten Steuerelektronik 20 verbunden sind. Die Steuerelektronik 20 übernimmt hier also die Bremssteuerung der Vorderradbremsen.

Hinterrädern 21, 22 sind jeweils ein Federspeicherbremszylinder 23, 24 zugeordnet, die über pneumatische Bremsleitungen 25, 26 mit zugeordneten Druckregelmodulen 27, 28 verbunden sind, welche über eine Versorgungsleitung 29 mit einem zweiten Druckluftspeicher 30 verbunden sind. Die Federspeicherbremszylinder 23, 24 sind ferner für eine gemeinsame Druckluftleitung 31 mit einem elektrisch ansteuerbaren Feststellventil 32 verbunden.

Die Druckregelmodule 27, 28 sind entsprechend der Vorderachse über elektrische Leitungen 33, 34 mit zugeordneten Bremsbelagverschleißsensoren 35, 36 sowie Raddrehzahlsensoren 37, 38 verbunden. Die Druckregelmodule 27, 28 weisen Steuereingänge 39, 40 auf, die über hier nur schematisch dargestellte elektrische Leitungen 41 mit einer zweiten Steuerelektronik 42 verbunden sind, die hier die Bremsen der Fahrzeughinterachse ansteuert.

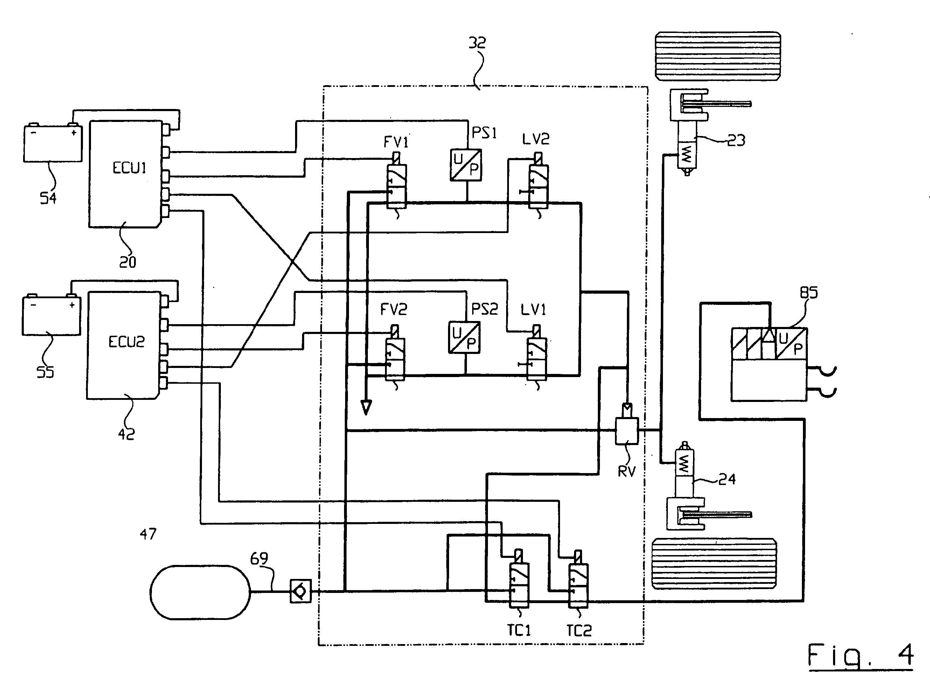

Das Feststellbremsventil 32, welches detailliert in Fig. 4 gezeigt und darunter beschrieben wird, ist über eine elektrische Steuerleitung 43 mit der ersten Steuerelektronik 20 und über eine elektrische Steuerleitung 44 mit der zweiten Steuerelektronik 42 verbunden. Ferner führt vom Feststellbremsventil 32 über ein Rückschlagventil 45 eine pneumatische Leitung 46 zu einem dritten Druckmittelspeicher 47. Die drei Druckmittelspeicher 14, 30 und 47 sind jeweils an eine gemeinsame Druckverteilungseinrichtung 48 angeschlossen, die von einer Druckerzeugungseinrichtung 49 (Kompressor) gespeist wird.

Die beiden Steuerelektroniken 20, 42 sind über elektrische Leitungen 50, 51 mit einem zugeordneten Bus VehCom1 bzw. VehCom2 verbunden. Über diese Busleitungen steht die Fahrzeugbremsanlage mit anderen elektrischen bzw. elektronischen Fahrzeugsystemen in Verbindung. Insbesondere wird über diese Busse ein vom Fahrer durch das Bremspedal vorgegebenes Bremsanforderungssignal den Steuerelektroniken 20, 42 zugeführt.

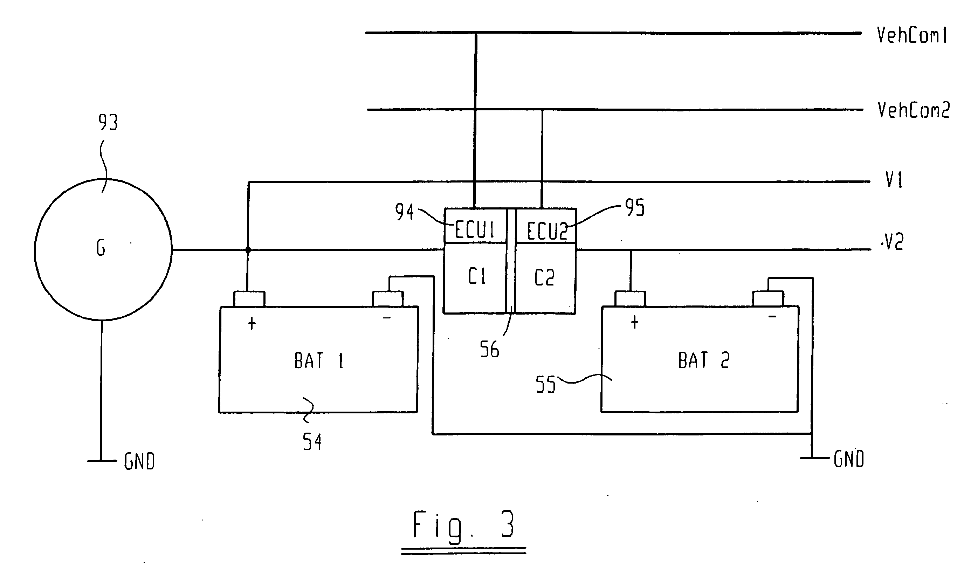

Die Steuerelektronik 20 ist über eine elektrische Leitung 52 mit einer Plusleitung V1 verbunden. Dementsprechend ist die Steuerelektronik 42 über eine elektrische Leitung 53 mit einer zweiten Plusleitung V2 verbunden. Die Plusleitung V1 ist an den Pluspol einer ersten Batterie 54 und die zweite Plusleitung V2 an den Pluspol einer zweiten Batterie 55 angeschlossen. Die Pluspole der beiden Batterien 54, 55 sind über eine galvanische Trennung 56 miteinander verbunden, was im Zusammenhang mit Fig. 3 noch näher erläutert wird.

Der Pluspol der Batterie 54 ist ferner über einen Gleichrichter 57 mit einem Wechselstromgenerator (Lichtmaschine) verbunden.

Die beiden Steuerelektroniken 20, 42 sind ferner über eine Kommunikationsleitung 58 und eine galvanische Trennung 59 miteinander verbunden.

Bei der Bremsanlage der Fig. 1 ist zur Verbesserung der Ausfallsicherheit eine "doppelte elektronische Steuerung" mit zwei separaten Energieversorgungseinrichtungen vorgesehen. Wenngleich die beiden elektronischen Steuerkreise galvanisch voneinander getrennt sind, können die beiden Batterien 54, 55 einen gemeinsamen Masseanschluß haben.

Das Bremsanforderungssignal des Fahrers wird beiden Steuerelektroniken durch elektrische Bremspedalsignale zugeführt. Mechanische Teile weisen einen ausfallsicheren Aufbau auf. Elektronische Komponenten hingegen sind doppelt vorhanden und mechanisch und galvanisch voneinander getrennt.

In Fig. 1 entspricht die "Aufteilung" der elektronischen Steuerung der "Aufteilung" der pneumatischen Versorgungskreise, d.h. die Versorgungs- und Steuerkreise sind jeweils auf Vorderachse bzw. Hinterachse aufgeteilt.

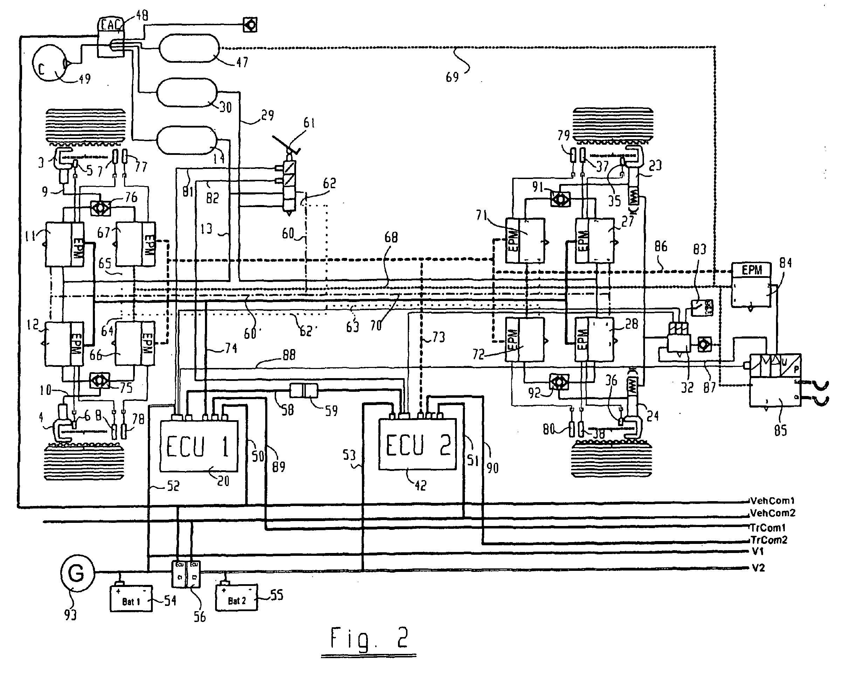

Fig. 2 zeigt einen weiter verbesserten Bremskreis, bei dem selbst bei einer Störung des "Primär-Bremskreises" sämtliche Fahrzeugbremsen betätigbar sind.

Fig. 2 zeigt eine Weiterentwicklung der Bremsanlage der Fig. 1. Auch hier weist die Bremsanlage zwei Bremskreise auf, nämlich einen ersten Bremskreis als Betriebsbremskreis (Primärkreis), der die Bremssteuerung aller Räder des Fahrzeugs und eines ggf. vorhandenen Anhängerfahrzeugs bei intakter Bremsanlage übernimmt, und einen zweiten Bremskreis (Sekundärkreis), der die Bremssteuerung aller Räder des Fahrzeugs und eines ggf. vorhandenen Anhängerfahrzeugs übernimmt, wenn der Betriebsbremskreis, also der erste Bremskreis, ausgefallen ist.

Der erste Bremskreis ist hier primär durch die Druckregelmodule 11, 12 der Vorderachse und die Druckregelmodule 27, 28 der Hinterachse gebildet. Die Druckregelmodule 11, 12 werden analog zu Fig. 1 über eine pneumatische Leitung 13 von dem ersten Druckmittelbehälter 14 mit Vorratsdruck versorgt. Der zweite Druckmittelbehälter 30 versorgt über die pneumatische Leitung 29 die Druckregelmodule 27, 28.

Die Druckregelmodule 11, 12 sind ferner über eine pneumatische Steuerleitung 60' mit einem Steuerausgang 60 eines Fußbremsventils 61 verbunden. Die pneumatische Steuerleitung 60' ist über das Fußbremsventil 61 ebenfalls mit dem ersten Druckmittelbehälter 14 verbunden.

Der zweite Druckmittelbehälter 30 ist über das Fußbremsventil 61 mit einem Steuerausgang 62 des Fußbremsventils 61 verbunden, an den über eine Steuerleitung 62' Steuereingänge 64, 65 von Druckregelmodulen 66, 67 des zweiten Bremskreises angeschlossen sind. Die Druckregelmodule 66, 67 des zweiten Bremskreises stehen ferner über eine pneumatische Versorgungsleitung 68, 69 mit dem dritten Druckmittelbehälter 47 in Verbindung.

Die Druckregelmodule 27, 28 des Betriebsbremskreises der Hinterachse sind über eine pneumatische Steuerleitung 70 ebenfalls mit dem pneumatischen Steuerausgang 60 des Fußbremsventils 61 verbunden.

Entsprechend der Vorderachse sind auch an der Hinterachse zwei weitere Druckregelmodule 71, 72 des zweiten Bremskreises vorgesehen, die über die pneumatische Versorgungsleitung 68, 69 vom dritten Druckmittelbehälter 47 mit Druckluft versorgt werden, und welche über eine pneumatische Steuerleitung 63 ebenfalls mit dem pneumatischen Steuerausgang 62 des Fußbremsventils 61 verbunden sind. Die Druckregelmodule 66, 67, 71, 72 des zweiten Bremskreises sind über elektrische Verbindungsleitungen 73 mit der zweiten Steuerelektronik 42 verbunden. Eine andere Zuordnung der pneumatischen Steuerausgänge 60, 62 des Fußbremsventils 61 zu den Druckregelmodulen 11, 12, 27, 28, 66, 67, 71, 72 ist selbstverständlich möglich.

Analog dazu sind die Druckregelmodule 11, 12, 27, 28 des Betriebsbremskreises über eine elektrische Leitung 74 mit der ersten Steuerelektronik 20 verbunden.

Die Druckregelmodule 11, 67 bzw. 12, 66 sind jeweils über ein zugeordnetes Hochdruckauswahlventil 75, 76 und die pneumatischen Leitungen 9, 10 mit den Bremszylindern 3, 4 verbunden.

Analog zu Fig. 1 sind an die Druckregelmodule 11, 12 des Betriebsbremskreises die Bremsbelagverschleißsensoren 5, 6 sowie die Raddrehzahlsensoren 7, 8 angeschlossen. Zusätzlich dazu sind beim Ausführungsbeispiel der Fig. 2 jeweils ein zweiter Raddrehzahlsensor 77, 78 vorgesehen, die an die Druckregelmodule 67 bzw. 66 des zweiten Bremskreises angeschlossen sind.

Analog dazu sind auch an der Hinterachse zusätzlich zu den Raddrehzahlsensoren 37, 38, die an die Druckregelmodule 27, 28 des Betriebsbremskreises angeschlossen sind, Raddrehzahlsensoren 79, 80 und Bremsbelagverschleißsensoren 35, 36 vorgesehen, die an die Druckregelmodule 71, 72 des zweiten Bremskreises angeschlossen sind.

Das Fußbremsventil 61 weist ferner elektrische Steuerausgänge auf, die zum einen über eine elektrische Leitung 81 mit der Steuerelektronik 20 und zum anderen über eine elektrische Leitung 82 mit der Steuerelektronik 42 verbunden sind. Analog zu Fig. 1 sind an die Steuerelektronik 20 und an die Steuerelektronik 42 Steuereingänge des Feststellbremsventils 32 angeschlossen, das hier zusätzlich einen weiteren manuellen Steuereingang 83 aufweist.

Zusätzlich zu Fig. 1 sind bei Fig. 2 ein weiteres Druckregelmodul 84 vorgesehen, das über eine pneumatische Steuerleitung mit einem Anhängersteuerventil 85 verbunden ist. Das Druckregelmodul 84 wird über die Vorratsleitung 69 vom dritten Druckmittelbehälter 47 mit Vorratsdruck versorgt und steht über eine elektrische Steuerleitung 86 mit der zweiten Steuerelektronik 42 in Verbindung. Ferner ist zwischen dem Feststellbremsventil 32 und dem Anhängersteuerventil 85 eine pneumatische Steuerleitung 87 für die Feststellbremse eines Anhängerfahrzeugs vorgesehen. Das Anhängersteuerventil 85 ist ebenfalls über eine elektrische Steuerleitung 88 mit der ersten Steuerelektronik 20 verbunden.

Analog zu Fig. 1 sind die beiden Steuerelektroniken 20, 42 über die Leitungen 52, 53 mit den Pluspolen V1 bzw. V2 und über die Leitungen 50, 51 mit Busleitungen VehCom1 bzw. VehCom2 verbunden. Zusätzlich sind hier Verbindungsleitungen 89, 90 zu TrCom1 bzw. TrCom2-Anschlüssen vorgesehen, welche zu einem Anhänger führen. Die Energieversorgung über die Batterien 54, 55 entspricht Fig. 1. Im Unterschied zu Fig. 1 ist hier die Druckverteilungseinrichtung 48 ebenfalls an den VehCom1-Bus angeschlossen, welche einen fehlerhaften Druckluftversorgungskreis trennen kann und den notwendigen Systemdruck für alle anderen Kreise aufrecht erhält.

Entsprechend Fig. 1 sind die beiden Steuerelektroniken 20, 42 über die elektrische Leitung 58 und die galvanische Trennung 59 miteinander verbunden. Durch diese Kommunikation wird verhindert, daß beispielsweise ein Aktuator von verschiedenen Steuergeräten gleichzeitig angesteuert wird.

Analog zur Vorderachse sind auch an der Hinterachse die Druckregelmodule 27, 71 bzw. 28, 72 jeweils über ein Hochdruckauswahlventil 91, 92 mit Eingängen der Federspeicherbremszylinder 23, 24 verbunden.

Die Hochdruckauswahlventile (High Select) 75, 76, 91, 92 stellen sicher, daß jeweils der höhere der beiden Bremsdrücke der angeschlossenen Bremskreise zu den Bremszylindern durchgesteuert wird. Im Normalbetrieb "übersteuert" das Betriebsbremssystem das zweite Bremssystem, wobei die Drücke im zweiten Bremskreis etwas kleiner sind als im Betriebsbremskreis. Dies stellt eine zuverlässige Drucksteuerung sicher und ermöglicht es dem zweiten Bremskreis, seine eigene "Funktionstüchtigkeit" zu überprüfen, beispielsweise durch Druckmessung an den Ausgängen der Druckregelmodule 66, 67 bzw. 71, 72 des zweiten Bremskreises, d.h. vor den Hochdruckauswahlventilen 75, 76, 91, 92.

Vom Ausgang der Hochdruckauswahlventile 75, 76, 91, 92 sind die Ventilkomponenten nunmehr "einfach" vorhanden. Dementsprechend sind sie ausfallsicher aufgebaut.

Die oberste Ebene der elektronischen Steuerung des Bremssystems ist durch die zwei Steuerelektroniken 20, 42 (Hauptsteuerelektronik und zweite Steuerelektronik) realisiert. Die beiden Steuerelektroniken weisen zwei voneinander unabhängige galvanisch getrennte Kommunikationsverbindungen 58, 59 auf. Über diese "Verbindungsleitungen" können Plausibilitätskontrollen der beiden unabhängigen Kreise durchgeführt werden. Ferner können "gelernte" und momentane bzw. gemessene Bremsparameter ausgetauscht werden. Die "Haupt-ECU" (Steuerelektronik 20) übernimmt im Normalbetrieb die Steuerung aller Fahrzeugbremsen und außerdem, wenn das zweite System gestört bzw, ausgefallen ist.

Bei einem Ausfall des Hauptbremssystems übernimmt das zweite System die Bremssteuerung. Das Hauptsystem weist eine pneumatische Druckversorgung durch den Druckmittelspeicher 14 für die Vorderachse und durch den Druckmittelspeicher 30 für die Hinterachse auf und steuert die Drücke über die zugeordneten Druckregelmodule 11, 12, 27, 28.

Zur Erhöhung der Störsicherheit sind an jedem Rad zwei Raddrehzahlsensoren vorgesehen, wobei einer dem jeweiligen Druckregelmodul des Betriebsbremskreises und der andere dem zugeordneten Druckregelmodul des zweiten Bremskreises zugeordnet ist.

Das Fußbremsventil 61 ist mit beiden ECUs, d.h. mit den Steuerelektroniken 20, 42 verbunden, so daß eine galvanische Trennung sichergestellt ist, was Plausibilitätskontrollen ermöglicht.

Jede ECU weist eine Datenverbindung zu ihrer zugeordneten übergeordneten Steuereinheit auf, von der externe Bremsanforderungen akzeptiert werden können. Diese Datenverbindungen müssen natürlich galvanisch getrennt von den beiden Bremssteuerkreisen sein.

Die Park- bzw. Feststellbremse wird ausschließlich elektronisch durch beide unabhängigen ECUs angesteuert und direkt elektrisch durch den Fahrer, und zwar in folgender Weise. Die elektrische Betätigung der Feststellbremse durch den Fahrer geht der elektronischen Steuerung durch die beiden ECUs vor. Die Feststellbremse wird hingegen nur dann gelöst, wenn von den ECUs und vom Fahrer Lösesignale vorliegen.

Fig. 3 zeigt die Energieversorgung der Bremssteuerung der Fig. 2 in vergrößerter Darstellung. Ein Generator 93 (Lichtmaschine) erzeugt eine Spannung und ist mit dem Pluspol der Batterie 54 sowie der galvanischen Trenneinrichtung 56 (Supply Duplicator Unit) verbunden. Der Pluspol der Batterie 55 ist ebenfalls an die galvanische Trenneinrichtung angeschlossen. Die Pluspole der beiden Batterien 54, 55 sind also galvanisch getrennt. Die galvanische Trennung kann beispielsweise durch einen Konverter mit elektromagnetischer Übertragung realisiert sein.

Die Minuspole der beiden Batterien 54, 55 und der Generator 93 weisen jeweils einen gemeinsamen Masseanschluß (GND) auf. Vom Pluspol der Batterie 54 ist das Potential V1 und vom Pluspol der Batterie 55 das Potential V2 abgreifbar. Die Trenneinrichtung 56 weist ferner Überwachungselektroniken 94, 95 auf, die mit den Busleitungen VehCom1 bzw. VehCom2 verbunden sind. Die Überwachungselektroniken 94, 95 überwachen und steuern die Lade- bzw. Entladevorgänge und zwar so, daß die Lebensdauern der Batterien optimiert werden.

Da nicht alle elektrischen Systeme in einem Fahrzeug sicherheitsrelevant sind, brauchen auch nicht alle Systeme "doppelt vorhanden" sein. Das Energieversorgungssystem ist daher "asymmetrisch" aufgebaut.

Das Hauptsystem versorgt, d.h. beispielsweise die Batterie 54 versorgt alle Hauptverbraucher, wie z.B. Anlasser, Lichter, Antriebssteuerung, den primären elektronischen Bremssteuerkreis, den primären elektronischen Lenksteuerkreis etc. mit Strom. Das Sekundärsystem, d.h. die Batterie 55 versorgt die "nachgeordneten" Back-up-Komponenten aller sicherheitsrelevanten Systeme mit Strom, d.h. den elektronischen Back-up-Bremssteuerkreis bzw. einen elektronischen Back-up-Lenksteuerkreis.

Aufgrund der "Asymmetrie" kann die zweite Batterie eine geringere Kapazität als die erste haben bzw. es kann auch ein anderer Batterietyp verwendet werden. Die Batterien 54, 55 sind also hinsichtlich Größe, Kapazität, Lade- und Entladekurven etc. aufeinander abgestimmt.

Der Wechselstromgenerator 93 (Lichtmaschine) lädt die erste Batterie 54 und - galvanisch getrennt - auch die zweite "Back-up-Batterie" 55. Bei einer Störung in einem Versorgungskreis stellt die "Supply Duplicator Unit" 56 bzw. die Überwachungselektroniken die Integrität des anderen Kreises sicher.

Eine optimale Verwendung der Batterien erfordert den Batterien angepaßte Lade- und Entladeverfahren, was durch die elektronischen Steuereinrichtungen 94, 95 überwacht wird. Das Laden bzw. Entladen sollen also möglichst entsprechend vorgegebenen "Lade- bzw. Entladekurven" erfolgen. Die elektronischen Steuereinrichtungen 94, 95 dienen also als "intelligente Lade- bzw. Entladesteuereinrichtungen".

Da bei einer voll elektronischen Steuerung sicherheitsrelevanter Systeme der Batteriezustand eine sehr wichtige Information darstellt, weist die Trenneinrichtung 56 zwei galvanisch getrennte Datenverbindungen (nicht dargestellt) auf, über die Batteriezustandssignale übertragen werden.

Fig. 4 zeigt ein schematisches Ausführungsbeispiel des Feststellbremsventils 32. Es besteht aus zwei Funktionsventilen FV1, FV2, zwei Sperrventilen LV1, LV2, zwei Drucksensoren PS1, PS2 und zwei Trailer-Check-Ventilen TC1, TC2. Die Ventile FV1 und LV2 schalten den oberen Luftpfad des Feststellbremsventils 32, die Ventile FV2 und LV1 den unteren Luftpfad. Die Ventile FV1 und LV1 werden von der ersten Steuerelektronik 20 gesteuert, die Ventile FV2 und LV2 von der Steuerelektronik 42. Im Normalfall steuern die Funktionsventile FV1, FV2 die Funktion der Feststellbremse. Im Fehlerfall eines Funktionsventils (z.B. FV2) wird das zugehörige Sperrventil LV1 den fehlerhaften Luftpfad sperren.

Ein Relaisventil RV ist ein Leistungsventil und wird von den Ventilen FV1, FV2, LV1, LV2 gesteuert, da diese nicht in der Lage sind, die Federspeicherbremszylinder 23, 24 genügend schnell zu betätigen.

Die Trailer-Check-Ventile TC1, TC2 sind für die Überprüfung der Federspeicherbremswirkung zuständig.

Wenn das Funktionsventil FV1 oder dessen Steuerung einen Fehler aufweist, wird das Sperrventil LV2 betätigt und somit der obere Luftpfad gesperrt. In diesem Fall ist eine einwandfreie Funktion weiterhin durch das Funktionsventil FV2 und das Sperrventil LV1 gesichert.

Wenn das Sperrventil LV2 oder dessen Steuerung einen Fehler aufweist, dann müssen weiterhin beide Funktionsventile FV1, FV2 angesteuert werden, und so wird eine einwandfreie Funktion weiterhin aufrecht erhalten.

Zur Fehlererkennung in der Feststellbremsanlage werden zwei Drucksensoren PS1, PS2 eingesetzt, welche in den Schaltsequenzen der Funktionsventile FV1, FV2 und Sperrventile LV1, LV2 abgefragt werden.

Bei Ausfall aller elektrischen Versorgungsspannungen wird das Feststellbremsventil 32 bremsen.

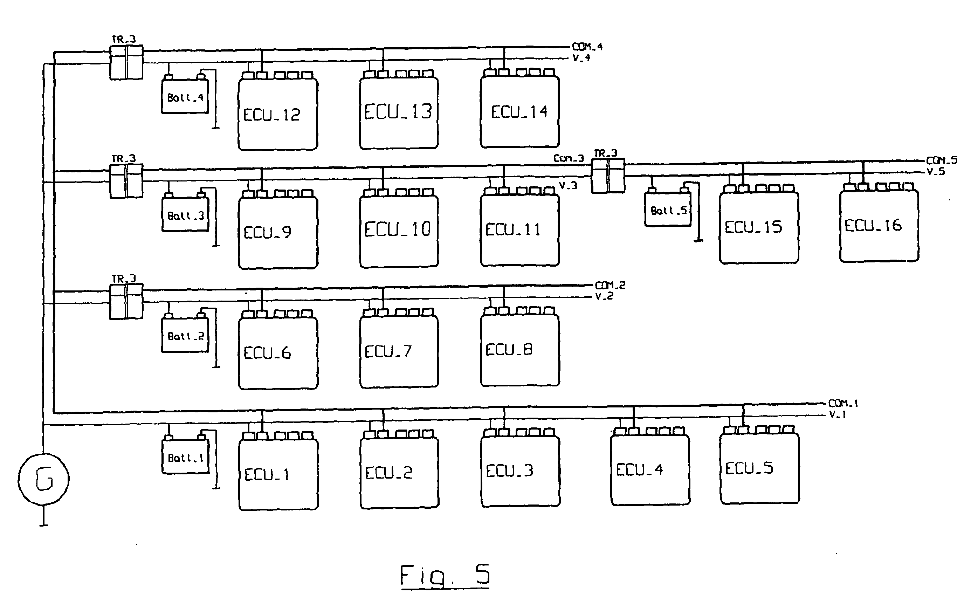

Fig. 5 zeigt eine schematische Darstellung vernetzter elektronischer Steuersysteme mit mehrfachen Redundanzebenen. Es sind nur Steuersysteme ECU_1 bis ECU_16 mit ihren Versorgungsleitungen und Kommunikationsverbindungen gezeigt. Die Steuersysteme sind in Systemgruppen angeordnet. ECU_1 bis ECU_5 sind die Grundsysteme, wie z.B. Bremse, Lenkung, Fahrzeugdynamik, Motorsteuerung, Getriebesteuerung, usw. Diese Systeme werden von einem Stromgenerator G über eine Versorgungsleitung V_1 versorgt. Der zugehörige Energiespeicher ist eine Batterie BATT_1. Die nächste Gruppe wird durch die Steuersysteme ECU_6 bis ECU_8 gebildet, welche auch von dem Stromgenerator G versorgt wird. Jedoch befindet sich in der Versorgungsleitung ein Umwandler TR_1, an welchem eine Versorgungsleitung V_2 angeschlossen ist. Die Gruppe der Steuersysteme ECU_6 bis ECU_8 sind die sicherheitskritischsten redundanten Paare der Steuersysteme ECU_1 bis ECU_5 (z.B. Bremse 2, Lenkung 2, Fahrzeugdynamik 2).

Auch die Kommunikationsleitungen der Steuersysteme untereinander sind durch Umwandler getrennt. So besteht eine Kommunikationsverbindung beispielsweise zwischen den Steuersystemen ECU_1 bis ECU_8 durch die Kommunikationsleitung COM_1, welche durch den Umwandler TR_1 mit einer Kommunikationsleitung COM_2 der Steuersysteme ECU_6 bis ECU_8 verbunden ist.

Fig. 5 stellt eine vierfache Redundanz dar, bei welcher vier Umwandler TR1 bis TR4 verwendet werden.

Die Lage der Steuersysteme ECU_15 bis ECU_16 zeigt eine weitere Möglichkeit der Verwendung von Umwandlern. Diese Steuersysteme sind durch eine Versorgungsleitung V_5 und eine Kommunikationsleitung COM_5 untereinander verbunden und an den Umwandler TR_4 angeschlossen. Der Umwandler TR_4 bildet die Verbindung zu der Versorgungsleitung V_3 und der Kommunikationsleitung COM_3, welche wiederum durch einen weiteren Umwandler TR_2 mit der Versorgungsleitung V_1 und der Kommunikationsleitung COM_1 in Verbindung stehen.

Die Umwandler TR_1 bis TR_4 bilden galvanische Trennungen zwischen den verschiedenen Redundanzebenen.

## Patentansprüche

1. Bremsanlage für Fahrzeuge, insbesondere Nutzfahrzeuge, mit mindestens einem ersten und mindestens einem zweiten Bremskreis, wobei die beiden Bremskreise jeweils einen elektrischen Steuerkreis mit jeweils einer Steuerelektronik (20, 42) und einer eigenen Energieversorgungseinrichtung (54, 55) und durch die Steuerelektroniken (20, 42) ansteuerbare Bremsbetätigungseinrichtungen (11, 12, 27, 28, 66, 67, 71, 72) aufweisen, wobei mindestens eine Bremsbetätigungseinrichtung (11, 12, 27, 28, 66, 67, 71, 72) von mehr als einer Steuerelektronik (20, 42) ansteuerbar ist,
**dadurch gekennzeichnet,**
**daß** die Bremskreise über ein Fußbremsventil (61) elektrisch ansteuerbar sind und
**daß** das Fußbremsventil (61) zwei elektrische Bremsgebereinrichtungen aufweist, die jeweils galvanisch getrennt mit den Steuerelektroniken (20, 42) verbunden sind.

2. Bremsanlage nach Anspruch 1, **dadurch gekennzeichnet,**
**daß** die elektrischen Steuerkreise galvanisch voneinander getrennt sind.

3. Bremsanlage nach Anspruch 1 oder 2, **dadurch gekennzeichnet,**
**daß** die Steuerelektronik (20) des ersten Bremskreises über eine Kommunikationsleitung (58) mit der Steuerelektronik (42) des zweiten Bremskreises verbunden ist, wobei die Kommunikationsleitung (58) eine Einrichtung (59) zur galvanischen Trennung der beiden Steuerkreise aufweist.

4. Bremsanlage nach einem der Ansprüche 1 bis 3, **dadurch gekennzeichnet,**
**daß** die beiden Steuerkreise einen gemeinsamen Masseanschluß (GND) aufweisen.

5. Bremsanlage nach einem der Ansprüche 1 bis 4, **dadurch gekennzeichnet,**
**daß** die Steuerelektroniken (20, 42) galvanisch getrennt mit anderen elektrischen bzw. elektronischen Fahrzeugsystemen verbunden sind.

## Claims

1. Brake system for motor vehicles, in particular utility vehicles, with at least a first and at least a second brake circuit, which two brake circuits each have an electric control circuit each with an electronic control unit (20, 42) and a separate power supply unit (54, 55) and brake actuation systems (11, 12, 27, 28, 66, 67, 71, 72) actuatable by the electronic control units (20, 42), and at least one brake actuation system (11, 12, 27, 28, 66, 67, 71, 72) can be actuated by more than one electronic control unit (20, 42),
**characterised in that**
the brake circuits can be electrically actuated via a foot brake valve (61) and
the foot brake valve (61) has two electric brake transmitter units which are galvanically separated and connected to the electronic control units (20, 42) .

2. Brake system as claimed in claim 1, **characterised in that**
the electric control circuits are galvanically isolated from one another.

3. Brake system as claimed in claim 1 or 2,
**characterised in that**
the electronic control unit (20) of the first brake circuit is connected via a communication line (58) to the electronic control unit (42) of the second brake circuit and the communication line (58) has a device (59) for galvanically isolating the two control circuits.

4. Brake system as claimed in one of claims 1 to 3,
**characterised in that**
the two control circuits have a common ground connection (GND).

5. Brake system as claimed in one of claims 1 to 4,
**characterised in that**
the electronic control units (20, 42) are galvanically isolated and connected to other electric and electronic vehicle systems.

## Revendications

1. Système de freinage pour des véhicules, notamment des véhicules utilitaires, comportant au moins un premier et au moins un deuxième circuit de freinage, sachant que les deux circuits de freinage comprennent chacun un circuit électrique de commande respectivement pourvu d'une unité (20, 42) électronique de commande et d'un propre organe (54, 55) d'alimentation en énergie, et des organes (11, 12, 27, 28, 66, 67, 71, 72) d'actionnement de frein pouvant être asservis par les unités (20, 42) électroniques de commande, sachant qu'au moins un organe (11, 12, 27, 28, 66, 67, 71, 72) d'actionnement de frein peut être asservi par plus d'une unité (20, 42) électronique de commande,
**caractérisé en ce que** les circuits de freinage peuvent être asservis électriquement au moyen d'une soupape (61) de freinage commandée au pied,
et **en ce que** la soupape (61) de freinage commandée au pied comporte deux organes transmetteurs de freinage électriques, qui sont respectivement reliés aux unités (20, 42) électroniques de commande en étant galvaniquement isolés.

2. Système de freinage suivant la revendication 1, **caractérisé en ce que** les circuits électriques de commande sont galvaniquement isolés l'un de l'autre.

3. Système de freinage suivant la revendication 1 ou 2, **caractérisé en ce que** l'unité (20) électronique de l'intermédiaire d'une ligne (58) de communication à l'unité (42) électronique de commande du deuxième circuit de freinage, sachant que la ligne (58) de communication comprend un organe (59) pour l'isolation galvanique des deux circuits de commande.

4. Système de freinage suivant l'une des revendications 1 à 3, **caractérisé en ce que** les deux circuits de commande comprennent une connexion (GND) commune à la masse.

5. Système de freinage suivant l'une des revendications 1 à 4, **caractérisé en ce que** les unités (20, 42) électroniques de commande sont reliées à d'autres systèmes électriques ou électroniques du véhicule en étant galvaniquement isolées.
